# EUROPÄISCHE PATENTSCHRIFT

(11) **EP 3 057 821 B1**
(45) Veröffentlichungstag und Bekanntmachung des Hinweises auf die Patenterteilung: **16.05.2018**
(21) Anmeldenummer: 14761955.5
(22) Anmeldetag: 09.09.2014
(51) Int. Cl.: B60K 6/22, B60K 28/10, B60K 28/12, B60L 11/02, B60K 6/46, B60L 3/04, B60K 6/44, B60L 3/00, B60K 28/00

(54) **ARBEITSMASCHINE MIT ELEKTROANTRIEB, ERDUNGSEINRICHTUNG UND KURZSCHLUSSEINRICHTUNG FÜR ZWISCHENKREIS**
WORK MACHINE WITH ELECTRIC DRIVE, GROUNDING MECHANISM AND SHORT CIRCUIT MECHANISM FOR INTERMEDIATE CIRCUIT
ENGIN DE TRAVAIL À ENTRAÎNEMENT ÉLECTRIQUE, DISPOSITIF DE MISE À LA TERRE ET DISPOSITIF DE COURT-CIRCUIT POUR CIRCUIT INTERMÉDIAIRE

(30) Priorität: 15.10.2013 DE 102013017112; 19.12.2013 DE 102013021606
(43) Veröffentlichungstag der Anmeldung: 24.08.2016
(73) Patentinhaber: Liebherr-Components Biberach GmbH, 88400 Biberach/Riß (DE)
(72) Erfinder: SOMMER, Bernd, 88400 Biberach (DE); FEHRENSEN, Christian, 88400 Biberach (DE); MERKLE, Markus, 89597 Munderkingen (DE)
(74) Vertreter: Thoma, Michael
(86) Internationale Anmeldenummer: PCT/EP2014/002438
(87) Internationale Veröffentlichungsnummer: WO 2015/055267

(56) Entgegenhaltungen:
- EP-A1- 2 474 433
- EP-A2- 2 517 921
- DE-A1-102012 203 242
- DE-A1-102012 203 242
- DE-A1-102012 215 653
- Mittelspannungsgeräte Auswahl ET AL: "Trenn-und Erdungsschalter 3D", , 31. Dezember 2008 (2008-12-31), XP055164787, Internet Gefunden im Internet: URL:https://w3.siemens.com/powerdistributi on/global/SiteCollectionDocuments/en/mv/in door-devices/disconnector-earthing-switche s-3d/katalog-3d-trenn-und-erdungsschalter_ de.pdf [gefunden am 2015-01-26]
- Anonymous: "Sicherheitsbestimmungen und Sicherheitsregeln für Elektroarbeiten", , 25. Januar 2011 (2011-01-25), XP055165441, Gefunden im Internet: URL:http://www.vbg.de/apl/arbhilf/unterw/8 6_sus.htm [gefunden am 2015-01-28]
- , 31. Dezember 2012 (2012-12-31), XP055165468, Gefunden im Internet: URL:http://www.ormazabal.com/sites/default /files/ormazabal/productos/descargables/CA _502_DE_1303.pdf [gefunden am 2015-01-28]
- Mittelspannungsgeräte Auswahl ET AL: "Trenn-und Erdungsschalter 3D", , 31 December 2008 (2008-12-31), XP055164787, Internet Retrieved from the Internet: URL:https://w3.siemens.com/powerdistributi on/global/SiteCollectionDocuments/en/mv/in door-devices/disconnector-earthing-switche s-3d/katalog-3d-trenn-und-erdungsschalter_ de.pdf [retrieved on 2015-01-26]
- Anonymous: "Sicherheitsbestimmungen und Sicherheitsregeln für Elektroarbeiten", , 25 January 2011 (2011-01-25), XP055165441, Retrieved from the Internet: URL:http://www.vbg.de/apl/arbhilf/unterw/8 6_sus.htm [retrieved on 2015-01-28]

## Beschreibung

Die vorliegende Erfindung betrifft eine Arbeitsmaschine, insbesondere eine Bau-und/oder Abbaumaschine wie Raupe, Muldenkipper, Mininggerät oder dergleichen, mit einem Elektroantrieb umfassend eine Leistungselektronik, die zumindest einen Umformer aufweist, der von einer Abdeckung abgedeckte Leistungsanschlüsse zum Anschließen von Leistungskabeln besitzt, wobei eine manuell betätigbare Erdungseinrichtung zum Erden und/oder Kurzschließen des Umformers und/oder eines damit verbundenen Zwischenkreises vorgesehen ist. Die Erfindung betrifft dabei insbesondere auch einen solchen Umformer.

Bei selbstfahrenden Arbeitsmaschinen wie Muldenkippern, Trucks, Planierraupen oder selbstfahrenden Fräsern wie Surface Minern, Schneefräsen oder Asphaltfräsen werden in jüngerer Zeit Elektroantriebe mit zumindest einem Elektromotor verwendet, um die gegenüber hydrostatischen Antrieben typischen Vorteile solcher Elektroantriebe wie bspw. deren besseren Wirkungsgrad und eine leichtere Wartung zu nutzen. Durch den beträchtlich besseren Wirkungsgrad können bei den teilweise beachtlichen Leistungen auch deutlich niedrigere Betriebskosten erreicht werden. Der Elektroantrieb kann dabei insbesondere als Fahrantrieb genutzt werden, mittels dessen zumindest ein Rad oder ein Kettenantrieb des Fahrwerks angetrieben wird, aber auch zum Antreiben eines Hauptarbeitsaggregats wie bspw. der Fräswalze eines Surface-Miners eingesetzt werden.

Zur Stromversorgung des Elektroantriebs kann dabei ein Generator vorgesehen sein, der von einem Verbrennungsmotor bspw. in Form eines Dieselmotors, eines Benzinmotors oder eines Gasmotors antreibbar ist. Die Leistungselektronik zwischen dem genannten Generator und einem jeweiligen Elektromotor, mit dem beispielsweise ein Rad des Fahrwerks oder ein Ritzel eines Kettenantriebs angetrieben werden kann, umfasst dabei regelmäßig zwei Umformer, von denen einer als Generatorumformer dient und dem Generator zugeordnet ist und der andere als Motorumformer dient und dem Elektromotor zugeordnet ist, wobei die beiden Umformer durch einen gemeinsamen Zwischenkreis, insbesondere einem Gleichspannungszwischenkreis verbunden sein können. Über die genannte Leistungselektronik wird der Elektromotor vom Generator her mit elektrischer Leistung versorgt, wobei ggf. bei bidirektionaler Ausbildung der Leistungselektronik auch eine Rückspeisung von elektrischer Motorbremsleistung, die im Schubbetrieb vom Elektromotor erzeugt wird, auf den Generator erfolgen kann. Ein solcher Umformer kann beispielsweise als Frequenzumrichter oder als DC-DC-Steller ausgebildet sein.

Da der Einsatz von solchen dieselelektrischen Antriebssystemen in Bau- bzw. Abbaumaschinen wie Trucks, Muldenkippern, Raupen und dergleichen bislang noch nicht weit verbreitet ist, besitzt das bei den Maschinenbetreibern vorhandene Servicepersonal meist nur elektrische Grundkenntnisse, so dass sich Wartungs-und Reparaturarbeiten regelmäßig nur auf den Austausch von einzelnen Komponenten beschränken. Dabei kommt es dennoch aufgrund der begrenzten elektrischen Fachkenntnisse des Servicepersonals bisweilen zu Sicherheitsproblemen, die aufgrund der hohen Leistungen und Spannungen zu schwerwiegenden Gefahrensituationen führen können.

Bisweilen verbleiben in den elektrischen Antriebskomponenten solcher Arbeitsmaschinen beträchtliche Restladungen und -spannungen, auch wenn die Arbeitsmaschine schon längst abgestellt und ausgeschaltet wurde. Eine Entladung erfolgt üblicherweise über die Bremswiderstände, was aber regelmäßig nicht zu einer vollständigen Entladung führt und die genannten Restspannungen nicht ausschließt. Insofern muss regelmäßig durch elektrisch geschultes Fachpersonal mit entsprechenden Messgeräten die Spannungsfreiheit geprüft werden, bevor an den elektrischen Antriebskomponenten gearbeitet werden kann. Dabei wird eine Erdung der Komponenten ebenfalls von elektrisch geschultem Fachpersonal mit externen Erdungsgeräten durchgeführt, was aber die Routine und Erfahrung des normalen Servicepersonals von Maschinenbetreibern übersteigt.

Baumaschinen mit solchen dieselelektrischen Antriebssystemen sind beispielsweise aus den Schriften US 7,950,481 B1 und US 8,395,335 B2 bekannt.

Aus der DE 10 2012 203 242 A1 ist ein Motorrad bekannt, das einen Hybridantrieb mit einem elektrischen Fahrmotor umfasst, der von einer Batterie über einen Motortreiber mit elektrischer Energie gespeist wird. Dabei ist ein Gehäuse des Motortreibers mit einem Schraubbolzen verschraubt, der erst zugänglich wird, wenn der Betätiger einer Entladeschaltung betätigt wurde.

Das Dokument "Sicherheitsbestimmungen und Sicherheitsregeln für Elektroarbeiten", 2011-01-25, XP055165441 beschreibt eine Auswertung der Berufsgenossenschaft der Feinmechanik, wonach für Arbeiten an einem Schaltschrank dessen Spannungsfreiheit durch eine Fachkraft festgestellt werden soll, wobei die Anlagen mit einem zweipoligen Spannungsprüfer oder geeigneten Messgeräten geprüft werden soll. Ferner beschreibt das Dokument "ORMAZABAL - Baureihe GAE1250kMAX", 2012-12-31, XP055165468, eine Mittelspannungsschaltanlage für Gebäudeinstallationen, Industrienetze oder Windkraftanlagen, wobei zum Feststellen der Spannungsfreiheit für Arbeiten an der Anlage ein Spannungsanzeigegerät in dafür an der Anlage vorgesehene Buchsen eingesteckt werden soll.

Der vorliegenden Erfindung liegt die Aufgabe zugrunde, eine verbesserte Arbeitsmaschine der eingangs genannten Art zu schaffen, die Nachteile des Standes der Technik vermeidet und Letzteren in vorteilhafter Weise weiterbildet. Insbesondere soll auch für elektrisch nicht weitreichend geschultes Personal ein sicherer Austausch von elektrischen Antriebskomponenten ermöglicht werden.

Erfindungsgemäß wird die genannte Aufgabe durch eine Arbeitsmaschine gemäß Anspruch 1 sowie einen Umformer gemäß Anspruch 13 gelöst. Bevorzugte Ausgestaltungen der Erfindung sind Gegenstand der abhängigen Ansprüche.

Es wird also vorgeschlagen, den Umformer so auszubilden, dass beim Entriegeln der Abdeckung, mit der restspannungsgefährdete Anschlussbereiche der Komponente gesichert sind, automatisch die Erdungseinrichtung zu betätigen ist, so dass eine Erdung bzw. Spannungsfreiheit gegeben ist, wenn die Abdeckung abgenommen werden kann. Erfindungsgemäß ist die manuell betätigbare Erdungseinrichtung mit einer Abdeckungsverriegelung der Abdeckung derart gekoppelt, dass die Abdeckung durch Betätigen der genannten Erdungseinrichtung entriegelbar ist. Die Entriegelung der restspannungsgefährdeten Anschlussbereiche erfolgt durch die Erdungseinrichtung, so dass eine Erdung sichergestellt ist, bevor auf die genannten Anschlussbereiche zugegriffen wird, beispielsweise um Leistungskabel zu lösen. Durch eine solche zwangsgeführte Erdung kann der Austausch der entsprechenden Komponente auch einem elektrisch nicht besonders geschulten Fachpersonal anvertraut werden.

Die herbeigeführte Erdung ist dabei vorteilhafterweise allpolig. Eine allpolige Erdung meint dabei die allpolige Verbindung der aktiven Leiter mit der Schutzerde bzw. dem leitenden Chassis oder Gehäuse des Systems. Bei Umrichtern kann die allpolige Erdung des Zwischenkreises (DC) ausreichend sein. Die Erdung der Wechselspannungsanschlüsse (AC) kann über Freilaufdioden der Leistungshalbleiter (IGBT) bzw. Dioden von Gleichrichtern der Leistungselektronik gegeben sein. Hierdurch kann das Einbringen elektrischer Energie während des Tausches eines oder mehrerer Umformer des Systems verhindert werden.

In Weiterbildung der Erfindung ist dabei die Koppelung zwischen der Erdungseinrichtung und der Abdeckungsverriegelung derart ausgebildet, dass sich die Abdeckung tatsächlich nur dann öffnen lässt, wenn sich die Erdungseinrichtung in ihrer geerdeten Stellung befindet. Befindet sich die Erdungseinrichtung nicht in ihrer geerdeten Stellung bzw. wurde sie noch nicht betätigt, wird die Abdeckungsverriegelung in ihrer verriegelnden Stellung gehalten, so dass sich die Abdeckung nicht lösen lässt. In alternativer Weiterbildung wäre es zwar ebenfalls möglich, eine Expertenentriegelung vorzusehen, mittels derer geschultes Fachpersonal beispielsweise mit Spezialwerkzeug die Abdeckung auch bei nicht betätigter Erdungseinrichtung öffnen kann. Um eine sicherheitsgefährdende Fehlbedienung zu vermeiden, kann jedoch die zuvor genannte Zwangskoppelung zwischen Erdungseinrichtung und Abdeckungsverriegelung vorteilhaft sein, die die Abdeckungsverriegelung in Verriegelungsstellung hält, solange die Erdungseinrichtung nicht betätigt wurde und sich in ungeerdeter Stellung befindet.

Die Koppelung zwischen der Erdungseinrichtung und der Abdeckung bzw. deren Abdeckungsverriegelung kann in Weiterbildung der Erfindung mechanisch ausgebildet sein. Beispielsweise kann ein Betätigungshebel der Erdungseinrichtung mit einem Verriegelungsteil der Abdeckungsverriegelung verbunden sein oder selbst das genannte Verriegelungsteil bilden, so dass das Verriegelungsteil immer mitbewegt wird, wenn der Betätigungshebel der Erdungseinrichtung bewegt wird. Alternativ oder zusätzlich zu einer solchen mechanischen Koppelung kann die Abdeckungsverriegelung auch elektrisch und/oder elektromagnetisch an die Erdungseinrichtung angekoppelt sein, beispielsweise dergestalt, dass ein Verriegelungsteil elektromagnetisch in die Verriegelungsstellung gebracht und dort gehalten wird, beispielsweise solange im Umformer-Zwischenkreis noch eine ausreichend hohe Restspannung vorhanden ist, wobei das Verriegelungsteil dann beispielsweise mittels einer Federeinrichtung in die gelöste Stellung verbracht werden kann, wenn die Restspannung abgefallen ist. Eine solche elektrische oder elektromagnetische Steuerung der Abdeckungsverriegelung kann auch in Abhängigkeit der Erdungseinrichtung arbeiten, beispielsweise dergestalt, dass die den Elektromagneten betätigende und damit das Verriegelungsteil verriegelnde Spannung von der Erdungseinrichtung unterbrochen bzw. abgebaut wird, wenn die Erdungseinrichtung in ihre geerdete Stellung verbracht wird.

Um sicherzustellen, dass die Erdungseinrichtung nach Lösen der Abdeckung bzw. bei der Wartung, Demontage oder dem Abbau der Komponente in der geerdeten Stellung verbleibt, kann die Erdungseinrichtung vorteilhafterweise in der geerdeten Stellung verriegelt werden. Hierzu kann ein geeignetes Riegelelement oder ein Schloss vorgesehen sein, das vorteilhafterweise selbstverriegelnd ausgebildet sein kann, beispielsweise in Form eines vorgespannten Schnappriegels, der einrastet, wenn die Erdungseinrichtung manuell betätigt wurde.

Gemäß der Erfindung sind der Erdungseinrichtung Sperr- und/oder Freischaltmittel zugeordnet, mittels derer die Erdungseinrichtung nur dann betätigbar, d.h. in die geerdete Stellung gebracht werden kann, wenn die im System befindliche Restspannung eine vorbestimmte Spannungsgrenze nicht überschreitet, beispielsweise unterhalb einer Schutzkleinspannungsgrenze liegt. Übersteigt die Restspannung im System noch die genannte Spannungsgrenze, bleibt die Erdungseinrichtung unbetätigbar, so dass das System nicht bei zu hohen Spannungen geerdet werden kann.

Dabei umfassen der Umformer einen Restspannungsmesser zum Messen einer Restspannung, wobei die Erdungseinrichtung eine Betätigungssperre zum Sperren der Erdungseinrichtung in der ungeerdeten Stellung in Abhängigkeit der gemessenen Restspannung aufweist. Die Sperrung der Erdungseinrichtung kann dabei im Sinne eines Blockierens bewerkstelligt werden, so dass ein Erdungselement nicht in seine Erdungsstellung bewegt werden kann. Alternativ oder zusätzlich kann die Sperre auch einen Betätigungsstrang zwischen manuellem Betätigungshebel und Erdungsteil unterbrechen, so dass ein Betätigen des Betätigungselements der Erdungseinrichtung ins Leere geht.

Der genannte Restspannungsmesser kann vorteilhafterweise in den Umformer integriert sein, beispielsweise durch eine integrierte Spannungsmessschaltung realisiert sein.

Vorteilhafterweise kann der genannte Restspannungsmesser mit einer Restspannungsanzeige zum Anzeigen der noch verbliebenen Restspannung verbunden sein, um einer Servicekraft anzuzeigen, dass die Restspannung noch nicht ausreichend abgebaut wurde und/oder bereits ausreichend abgebaut wurde. Eine solche Restspannungsanzeige kann beispielsweise eine optische Anzeigevorrichtung am Gehäuseäußeren umfassen, beispielsweise in Form einer farbigen LED.

Um keine externe Entladungseinrichtung an den Umformer anschließen zu müssen, kann in Weiterbildung der Erfindung in den Umformer eine automatische Entladungseinrichtung integriert sein, die den Umformer bzw. einen Umformerzwischenkreis automatisch entladet, beispielsweise jedes Mal nach Abschalten der Arbeitsmaschine und/oder Ausbleiben eines Steuersignals an den Umformer, beispielsweise wenn bei der Wartung das Steuerungskabel abgezogen wird. Mit einer solchen Entladungseinrichtung, die die Leistungselektronik bzw. deren Umformer jedes Mal nach Abstellen der Arbeitsmaschine und/oder nach Eingabe eines Wartungs- bzw. Servicemodusbefehls und/oder Abziehen des Steuerungskabels automatisch entlädt, bis die Restspannung unter die vorgenannte vorbestimmte Spannungsgrenze fällt, kann ein zwangsgesteuerter, zweistufiger Wartungsprozess erzielt werden. Zunächst muss die Arbeitsmaschine abgestellt werden und/oder der Befehl gegeben werden, dass sich die Arbeitsmaschine im Servicemodus befindet und/oder einfach das Steuerungskabel vom Umformer abgezogen werden. Dies veranlasst die genannte Entladungseinrichtung, den Umformer bzw. den Zwischenkreis automatisch zu entladen. Erst wenn der Entladungsprozess so weit erfolgreich war, dass der Restspannungsmesser eine ausreichend kleine Restspannung ermittelt, wird die Erdungseinrichtung freigeschaltet, so dass eine Servicekraft die Erdungseinrichtung schließen bzw. in die geerdete Stellung bringen kann. Dies wiederum, d.h. das Betätigen der Erdungseinrichtung gibt die Abdeckungsverriegelung frei, so dass die Abdeckung gelöst bzw. abgenommen und damit Zugang zu den restspannungsgefährdeten Anschlussbereichen erlangt werden kann.

Das elektrische Antriebssystem bzw. der Elektroantrieb der Arbeitsmaschine kann dabei mehrere Umformer aufweisen, die vorteilhafterweise alle in der genannten Weise durch eine Erdungseinrichtung und/oder eine Entladungseinrichtung geschützt sein können. Beispielsweise kann das elektrische Antriebssystem zumindest einen einem Elektromotor zugeordneten Motorumformer und einen einem Generator zugeordneten Generatorumformer umfassen, die durch einen gemeinsamen Zwischenkreis miteinander verbunden sind, um im Antriebsmodus vom Generator her den Elektromotor mit elektrischer Energie zu versorgen und/oder in einem Schubbetrieb vom Elektromotor erzeugte Motorbremsleistung auf den Generator zu speisen und ggf. auf einem Verbrennungsmotor abzustützen, der den genannten Generator antreibt, um im Antriebsmodus den elektrischen Strom zu erzeugen.

Durch die Verwendung von zwei Umformern, die jeweils in der genannten Weise mit einer Erdungseinrichtung und einer Entladeeinrichtung versehen sein können, in einem gemeinsamen System kann eine Redundanz erzielt werden. Vorteilhafterweise dient nach Ausbau eines elektrischen Umformers der andere elektrische Umformer als Systemkurzschließer. Die Erdung des verbleibenden Umformers stellt sicher, dass das System insgesamt geerdet bleibt, auch wenn ein Umformer ausgebaut wird.

Durch das Entfernen mindestens eines Umformers aus dem System kann die Freigabe zum Start der Verbrennungskraftmaschine derart verriegelt werden, dass ein Wiederanlauf der Verbrennungskraftmaschine unterbunden wird und erst nach Wiedereinbau aller Umformer wieder gegeben ist. Hierdurch wird das Einbringen elektrischer Energie während des Tausches eines oder mehrerer Umformer des Systems verhindert.

Die Verbrennungskraftmaschinen-Starter-Verriegelung kann beispielsweise in Form einer elektrischen Freigabekette analog einer Not-Aus-Kette ausgebildet sein. Vor dem Ausbau mindestens eines Umformers sollten unter anderem alle elektrischen Verbindungen zu diesem getrennt werden. Hierdurch wird die Freigabekette aufgetrennt und beispielsweise der Stromkreis zur Startereinrichtung der Verbrennungskraftmaschine unterbrochen. Erst nach Wiedereinbau und Anschluss aller Umformer des Systems ist die Freigabe zum Start der Verbrennungskraftmaschine wieder gegeben.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Arbeitsmaschine in Form eines Trucks, der als Muldenkipper ausgebildet sein kann,
- Fig. 2:: eine schematische Darstellung des elektrischen Antriebssystems der Arbeitsmaschine aus Fig. 1,
- Fig. 3:: eine schematische Darstellung eines der Umformer des elektrischen Antriebssystems der Arbeitsmaschine aus den vorhergehenden Figuren, die die in den Umformer integrierten Entlade- und Erdungseinrichtungen und die von der Erdungseinrichtung entriegelbare Anschlussbox zeigt, in der die Leistungskabel anschließbar sind,
- Fig. 4:: eine schematische Darstellung der Koppelung zwischen Erdungseinrichtung und Verriegelung der Abdeckung, mit der die Anschlüsse in der Anschlussbox des Umformers aus Fig. 3 abgedeckt sind, und
- Fig. 5:: eine schematische Darstellung einer Erdungs- bzw. Kurzschlußeinrichtung nach einem Ausführungsbeispiel der Erfindung.

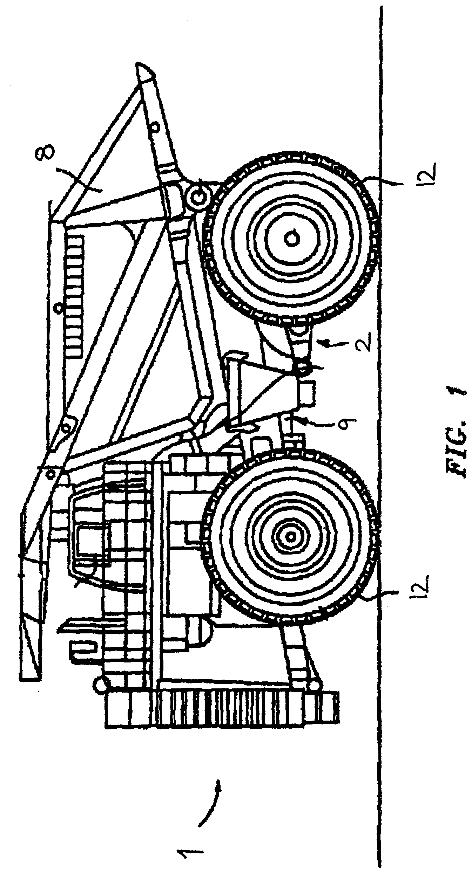

Wie Fig. 1 zeigt, kann die selbstfahrende Arbeitsmaschine 1 beispielsweise als Truck, insbesondere in Form eines Muldenkippers, ausgebildet sein und als Fahrwerk 2 mehrere Räder 12 umfassen, die auf mehrere Achsen verteilt sind und das Chassis bzw. den Rahmen der Arbeitsmaschine 1 tragen. Es versteht sich jedoch, dass die Arbeitsmaschine auch in anderer Form ausgebildet sein kann, beispielsweise als Planierraupe mit einem Kettenfahrwerk, oder in Form einer anderen Bau- oder Abbaumaschine mit einem Rad- oder Kettenfahrwerk.

Die Antriebssysteme der Arbeitsmaschine 1 umfassen zumindest einen Elektroantrieb 3 mit zumindest einem Elektromotor 4, der als Fahrantrieb dienen und die Räder 12 antreiben kann. Dabei kann ein Elektromotor 4 mehrere Räder 12 gleichzeitig antreiben, beispielsweise die Räder 12 einer Achse, ggf. über ein Verzweigungsgetriebe oder ein Differential. Alternativ kann auch ein Einzelradantrieb vorgesehen sein, bei dem jedem angetriebenen Rad 12 ein eigener Elektromotor 4 zugeordnet ist.

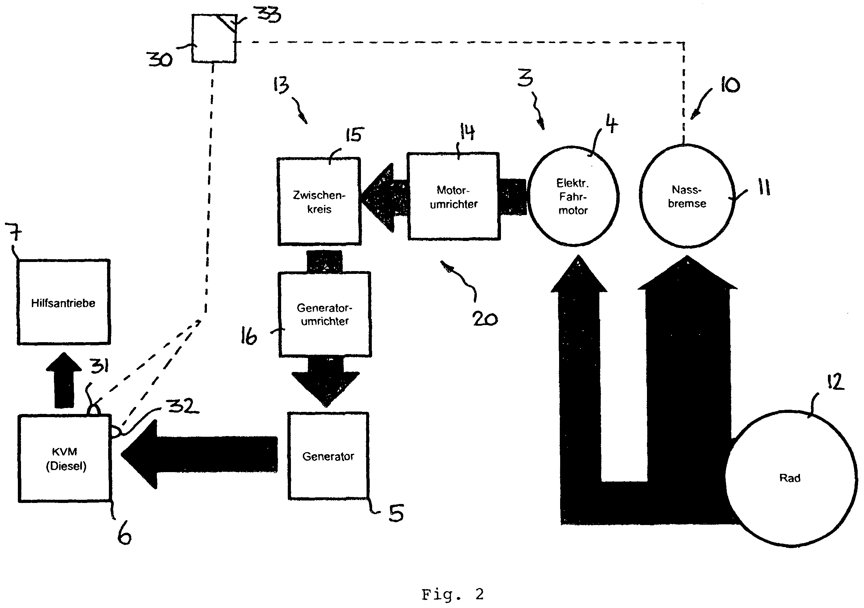

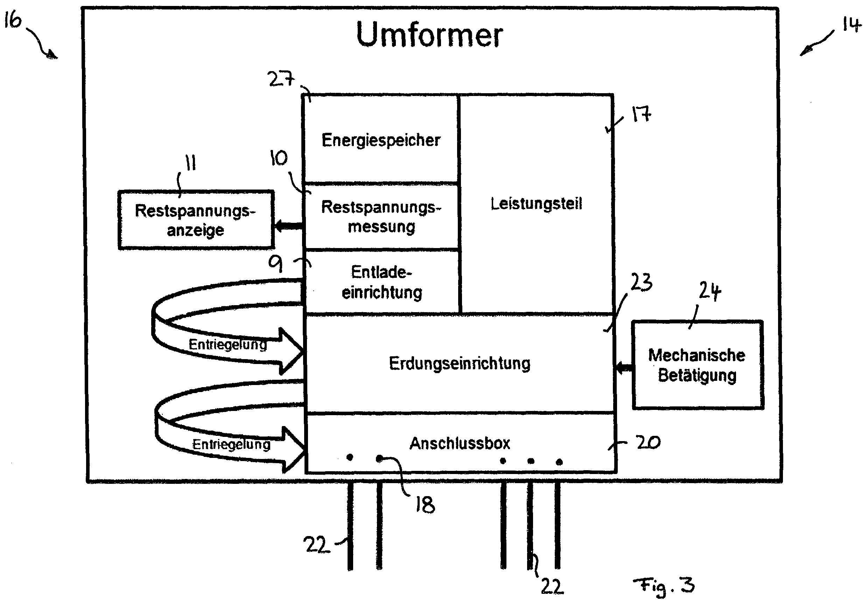

Wie Fig. 2 zeigt, wird der Elektroantrieb 3 von einem Generator 5 her mit elektrischem Strom versorgt, wobei der genannte Generator 5 von einem Verbrennungsmotor 6 her angetrieben wird, der beispielsweise als Dieselmotor oder als Benzinmotor oder auch als Gasmotor ausgebildet sein kann. Der zumindest eine Elektromotor 4 bzw. die ggf. mehreren Elektromotoren 4 ist/sind dabei über eine Leistungselektronik 13 an den Generator 5 angebunden, die zumindest einen dem jeweiligen Elektromotor 4 zugeordneten Motorumformer 14 und einen dem Generator 5 zugeordneten Generatorumformer 16 umfassen kann, wobei ein Zwischenkreis 15, insbesondere in Form eines Gleichspannungszwischenkreises, zwischen dem Motorumformer 14 und dem Generatorumformer 16 vorgesehen sein kann, vgl. Fig. 2. Der Generatorumformer 16, der Zwischenkreis 15 und der Motorumformer 14 sind hierbei vorteilhafterweise bidirektional arbeitend ausgebildet, um im Antriebsmodus, in dem der Generator 5 vom Verbrennungsmotor 6 angetrieben wird, den vom Generator 5 produzierten Strom auf den Elektromotor 4 geben zu können und im Bremsbetrieb vom Elektromotor 4 produzierten Strom in umgekehrter Richtung auf den Generator 5 rückspeisen zu können, wie noch erläutert wird. Die genannten Umformer 14 und 16 können Frequenzumrichter oder beispielsweise auch DC-DC-Steller sein und einen Zwischenkreis sowie einen Energiespeicher 27 aufweisen, vgl. Fig. 3.

Weiterhin kann die Arbeitsmaschine 1 zumindest einen Hilfsantrieb 7 umfassen, der ebenfalls von dem genannten Verbrennungsmotor 6 angetrieben werden kann. Bei dem genannten Hilfsantrieb 7 kann es sich beispielsweise um ein Hydraulikaggregat bzw. einen Hydraulikantrieb handeln, der eine von dem genannten Verbrennungsmotor 6 angetriebene Hydraulikpumpe umfassen kann, um entsprechende Hilfsaggregate hydraulisch antreiben zu können. Beispielsweise kann ein Hilfsantrieb 7 zum Verstellen der Lademulde 8 des in Fig. 1 dargestellten Muldenkippers dienen und hierzu zumindest einen Stellaktor umfassen, beispielsweise in Form eines Hydraulikaktors wie Hydraulikzylinder, um die Lademulde 8 zum Entladen aufkippen zu können.

Die genannten Hilfsantriebe 7 können jedoch auch noch weitere Hilfsaggregate wie beispielsweise Kühlaggregate, Lüfter, Lenkunterstützungssystem und dergleichen umfassen.

Wie Fig. 3 zeigt, kann zumindest einer oder jeder der vorgenannten Motor- und Generatorumformer 14, 16 in an sich bekannter Weise einen Leistungsteil 17 umfassen, der die üblichen Leistungselektronikbausteine zum Umformen der zu übertragenden Spannung aufweisen kann. Über Leistungsanschlüsse 18, die in einer Anschlussbox 20 aufgenommen und von einer Abdeckung 21 abgedeckt sein können, können Leistungskabel 22 an den jeweiligen Umformer bzw. Umformer angeschlossen werden, vgl. Fig. 3.

Um an dem Umformer bzw. dem Umformerzwischenkreis noch anliegende Restspannungen nach Abschalten der Maschine abbauen zu können, ohne dass hierfür ein externes Entladegerät angeschlossen werden muss, ist vorteilhafterweise in den Umformer eine Entladeeinrichtung 9 integriert, die mit dem genannten Leistungsteil 17 verbunden und beispielsweise Entladewiderstände aufweisen kann, um Restspannungen dissipativ abzubauen bzw. in Wärme umzuwandeln. Die Entladeeinrichtung 9 entlädt dabei auch den vorgenannten Energiespeicher 27 des Umformers.

Um einer Servicekraft die noch im System befindliche Restspannung anzuzeigen, ist vorteilhafterweise in den genannten Umformer weiterhin ein Restspannungsmesser 10 integriert, der eine geeignete Messschaltung aufweisen kann, um die genannte Restspannung bestimmen zu können. Der genannte Restspannungsmesser 10 ist vorteilhafterweise mit einer an einer Gehäuseaußenseite angebrachten Restspannungsanzeige 11 verbunden, um der Servicekraft die noch vorhandene Restspannung anzuzeigen, beispielsweise in Form eines Lichtsignals oder einer digitalen, numerischen Anzeige.

Um den Umformer bzw. den Zwischenkreis erden zu können, bevor die Anschlussbox 20 geöffnet und an den Anschlüssen gearbeitet wird, ist vorteilhafterweise ferner eine Erdungseinrichtung 23 in den Umformer integriert, wobei die genannte Erdungseinrichtung zusammen mit der Entladeeinrichtung 9 beispielsweise im Inneren eines gemeinsamen Gehäuses aufgenommen sein kann.

Die Erdungseinrichtung 23 ist vorteilhafterweise mechanisch betätigbar, beispielsweise über einen Betätigungshebel 24 oder ein in geeigneter Weise ausgebildetes Betätigungselement, beispielsweise in Form einer Taste am Gehäuseäußeren.

Die genannte Erdungseinrichtung 23 ist dabei vorteilhafterweise gegen Betätigung gesichert, solange die Restspannung im System noch über einem vorbestimmten Maß liegt. Beispielsweise kann eine mechanische Verriegelung des genannten Betätigungshebels 24 der Erdungseinrichtung 23 vorgesehen sein, wobei die genannte mechanische Verriegelung von der Entladeeinrichtung 9 und/oder dem Restspannungsmesser 10 ansteuerbar ist derart, dass die mechanische Verriegelung erst dann gelöst wird, wenn die Restspannung unter ein vorbestimmtes Maß gefallen ist und/oder die Entladungseinrichtung 9 betätigt wurde, ggf. über eine ausreichend lange Zeit.

Die Erdungseinrichtung 23 ist vorteilhafterweise wiederum mit der Abdeckung 21 der Anschlussbox 20 bzw. einer Abdeckungsverriegelung 25 gekoppelt, durch die die Anschlussbox bzw. deren Abdeckung 21 verriegelbar ist. Die genannte Abdeckungsverriegelung 25 kann in vorteilhafter Weiterbildung der Erfindung innenliegend angeordnet bzw. im Inneren der Anschlussbox 20 untergebracht sein. Alternativ oder zusätzlich kann auch eine selbstverriegelnde Ausbildung der Abdeckungsverriegelung 25 vorgesehen sein, beispielsweise mittels einer Vorspanneinrichtung, die die genannte Abdeckungsverriegelung automatisch schließt bzw. verriegelt, wenn die Abdeckung aufgesetzt bzw. die Anschlussbox 20 geschlossen wird.

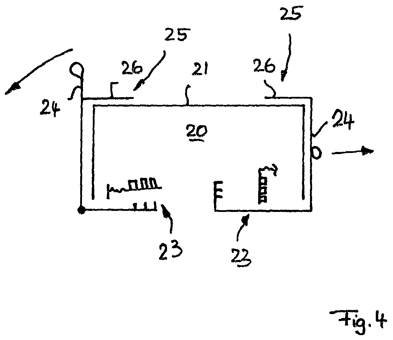

Die Erdungseinrichtung 23 ist dabei mit der genannten Abdeckungsverriegelung 25 vorteilhafterweise derart gekoppelt, dass sich die Abdeckung 21 nur dann abnehmen bzw. die Anschlussbox 20 nur dann öffnen lässt, wenn die Erdungseinrichtung 23 betätigt wurde und sich in ihrer geerdeten Stellung befindet. Beispielsweise kann hierzu der Betätigungshebel 24 der Erdungseinrichtung 23 mit einem Verriegelungsteil der Abdeckungsverriegelung 25 gelenkig oder starr verbunden sein, so dass sich der genannte Verriegelungsteil mitbewegt, wenn der Betätigungshebel 24 betätigt wird, so wie dies Fig. 4 zeigt. Beispielsweise kann der Betätigungshebel 24 als Schwenkhebel ausgebildet sein und ein über die Abdeckung 21 schiebbaren Verriegelungsteil 26 umfassen, der sich von der Abdeckung 21 löst, wenn der Betätigungshebel 24 betätigt wird, so wie dies die linke Seite der Fig. 4 zeigt. Alternativ oder zusätzlich kann der Betätigungshebel 23 auch translatorisch verschieblich gelagert sein, beispielsweise nach Art eines Schiebeschalters, und den Verriegelungsteil 26 tragen, so dass durch Verschieben des Betätigungshebels 24 die Abdeckung 21 entriegelt werden kann, so wie dies die rechte Seite der Fig. 4 zeigt.

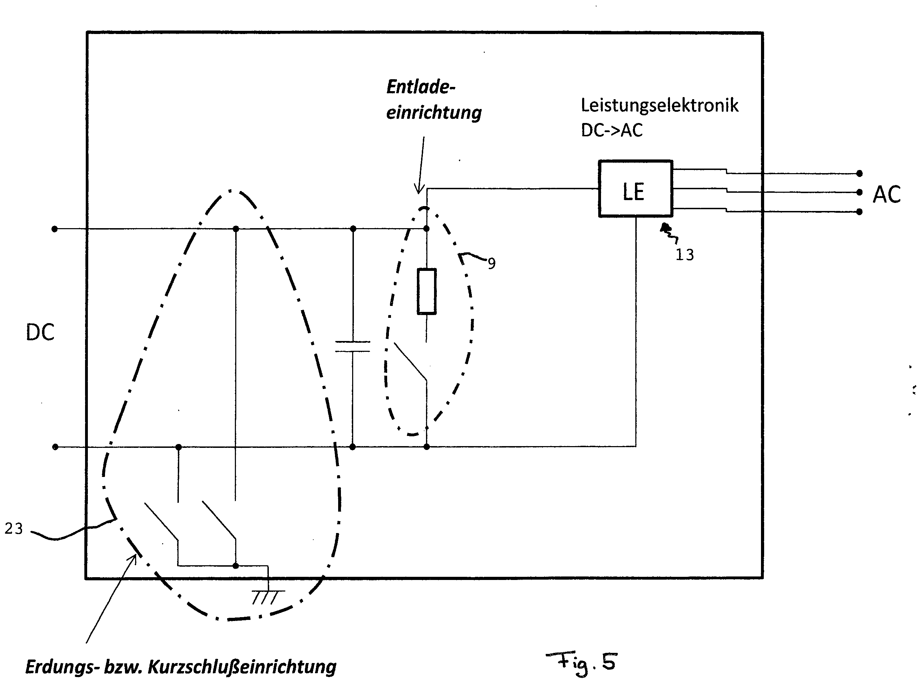

Figur 5 zeigt ferner beispielhaft eine Ausführung der Erdungs- bzw. Kurzschlußeinrichtung 23 zum allpoligen Erden des Umformers bzw. Kurzschließen des Zwischenkreises. Bei einer radgetriebenen Arbeitsmaschine wie bspw. einem Truck kann die Erdung dabei auf die Chassismasse erfolgen, die insofern als "Erde" dient, wobei insbesondere bei anderen Anwendungen die Erdung auch auf die "richtige" Erde erfolgen kann.

## Patentansprüche

1. Arbeitsmaschine, insbesondere Bau- und/oder Abbaumaschine wie Raupe, Muldenkipper, Truck und dergleichen, mit einem Elektroantrieb (3) umfassend eine Leistungselektronik (13), die zumindest einen Umformer (14, 16) und/oder einen Zwischenkreis (15) aufweist sowie von einer Abdeckung (21) abgedeckte Leistungsanschlüsse (18) zum Anschließen von Leistungskabeln (22) besitzt, wobei eine manuell betätigbare Erdungseinrichtung (23) zum insbesondere allpoligen Erden des Umformers (14, 16) und/oder zum Kurzschließen des zumindest einen Zwischenkreises (15) vorgesehen ist, wobei die Erdungseinrichtung (23) mit einer Abdeckungsverriegelung (25) zum Verriegeln der Abdeckung (21) gekoppelt ist derart, dass die Abdeckung (21) durch Betätigen der Erdungseinrichtung (23) entriegelbar ist, **dadurch gekennzeichnet, dass** der Umformer (14, 16) einen Restspannungsmesser (10) zum Messen einer Restspannung umfasst, die am Umformer (14, 16) oder am Umformerzwischenkreis (15) anliegt, wobei die Erdungseinrichtung (23) eine Betätigungssperre zum Sperren der Erdungseinrichtung in der ungeerdeten und/oder nicht kurzgeschlossenen Stellung in Abhängigkeit der gemessenen Restspannung aufweist, wobei die Betätigungssperre erst dann lösbar ist oder sich automatisch löst, wenn die vom Restspannungsmesser (10) gemessene Restspannung kleiner als eine vorbestimmte Spannungsgrenze ist.

2. Arbeitsmaschine nach dem vorhergehenden Anspruch, wobei die Abdeckungsverriegelung (25) derart an die Erdungseinrichtung (23) zwangsgekoppelt ist, dass sich die Abdeckung (21) nur öffnen lässt, wenn die Erdungseinrichtung (23) in einer geerdeten und/oder kurzgeschlossenen Stellung ist.

3. Arbeitsmaschine nach einem der vorhergehenden Ansprüche, wobei die Erdungseinrichtung (23) eine Verriegelungseinrichtung zum Verriegeln der Erdungseinrichtung (23) in der geerdeten und/oder kurzgeschlossenen Stellung aufweist.

4. Arbeitsmaschine nach einem der vorhergehenden Ansprüche, wobei ein Betätigungshebel (24) der Erdungseinrichtung (23) mechanisch mit einem Verriegelungsteil (26) der Abdeckungsverriegelung (25) zwangsgekoppelt ist.

5. Arbeitsmaschine nach einem der vorhergehenden Ansprüche, wobei die Erdungseinrichtung (23) in den Umformer (14, 16) integriert ist, insbesondere im Inneren eines Umformergehäuses angeordnet ist derart, dass lediglich ein Betätigungselement der Erdungseinrichtung (23) von der Umformeraußenseite her zugänglich ist.

6. Arbeitsmaschine nach einem der vorhergehenden Ansprüche, wobei der Restspannungsmesser (10) mit einer Restspannungsanzeige (11) zum Anzeigen der gemessenen Restspannung verbindbar ist.

7. Arbeitsmaschine nach einem der vorhergehenden Ansprüche, wobei der Umformer (14, 16) eine integrierte Entladeeinrichtung (9) zum Entladen des Umformers (14, 16) und/oder eines Zwischenspannungskreises (15) aufweist, wobei die Entladeeinrichtung (9) durch Unterbrechen oder Abziehen einer Steuerleitung zum Steuern des Umformers betätigbar ist.

8. Arbeitsmaschine nach einem der vorhergehenden Ansprüche, wobei der zumindest eine Umformer (14) ein einem Elektromotor (4) des Elektroantriebs (3) zugeordneter Motorumformer (14) ist.

9. Arbeitsmaschine nach einem der vorhergehenden Ansprüche, wobei der zumindest eine Umformer ein einem Generator (5) des Elektroantriebs (3) zugeordneter Generatorumformer (16) ist.

10. Arbeitsmaschine nach einem der vorhergehenden Ansprüche, wobei zumindest zwei Umformer (14, 16) vorgesehen sind, die durch einen gemeinsamen Zwischenkreis (15) miteinander verbunden sind, wobei jeder der beiden Umformer (14, 16) eine Erdungseinrichtung (23) und eine integrierte Entladeeinrichtung (9) besitzt, so dass der Zwischenkreis auch nach Ausbau eines Umformers durch den anderen geerdeten und/oder kurzgeschlossenen Umformer insgesamt geerdet ist.

11. Arbeitsmaschine nach einem der vorhergehenden Ansprüche, wobei durch Entfernen zumindest eines Umformers (14,16) aus seiner Einbauposition automatisch eine Startverriegelungseinrichtung derart betätigt wird, dass die Verbrennungskraftmaschine (6) nicht gestartet werden kann, wobei das Entfernen des Umformers (14,16) aus seiner Einbauposition nur möglich ist, wenn die Startverriegelungseinrichtung manuell derart betätigt wird, dass die Verbrennungskraftmaschine (6) nicht gestartet werden kann.

12. Arbeitsmaschine nach einem der vorhergehenden Ansprüche, wobei ein Verbrennungsmotor (6) zum Antreiben eines Generators (5) zum Versorgen des Elektroantriebs (3) mit elektrischer Energie vorgesehen ist.

13. Umformer für eine Arbeitsmaschine nach einem der vorhergehenden Ansprüche, mit von einer Abdeckung (21) abgedeckten Leistungsanschlüssen (18) zum Anschließen von Leistungskabeln (22), wobei eine manuell betätigbare Erdungseinrichtung (23) zum insbesondere allpoligen Erden des Umformers (14,16) und/oder Kurzschließen zumindest eines Zwischenkreises (15) vorgesehen ist, wobei die Erdungseinrichtung (23) mit einer Abdeckungsverriegelung (25) zum Verriegeln der Abdeckung (21) gekoppelt ist derart, dass die Abdeckung (21) durch Betätigen der Erdungseinrichtung (23) entriegelbar ist, **dadurch gekennzeichnet, dass** der Umformer (14, 16) einen Restspannungsmesser (10) zum Messen einer Restspannung umfasst, die am Umformer (14, 16) oder am Umformerzwischenkreis (15) anliegt, wobei die Erdungseinrichtung (23) eine Betätigungssperre zum Sperren der Erdungseinrichtung in der ungeerdeten und/oder nicht kurzgeschlossenen Stellung in Abhängigkeit der gemessenen Restspannung aufweist, wobei die Betätigungssperre erst dann lösbar ist oder sich automatisch löst, wenn die vom Restspannungsmesser (10) gemessene Restspannung kleiner als eine vorbestimmte Spannungsgrenze ist.

## Claims

1. A work machine, in particular a construction machine and/or mining machine such as a crawler-type vehicle, a dump truck, a truck and the like, having an electric drive (3) comprising power electronics (13) which have at least one transformer (14, 16) and/or an intermediate circuit (15) and having power connections (18) covered by a cover (21) for connecting power cables (22), wherein a manually actuable grounding device (23) is provided for the grounding, in particular all-pole grounding, of the transformer (14, 16) and/or for the short-circuiting of the at least one intermediate circuit (15), wherein the grounding device (23) is coupled to a cover latching (25) for latching the cover (21) such that the cover (21) can be unlatched by actuating the grounding device (23), **characterized in that** the transformer (14, 16) comprises a residual voltage gauge (10) for measuring a residual voltage that is applied to the transformer (14, 16) or to the transformer intermediate circuit (15), wherein the grounding device (23) comprises an actuation lock for locking the grounding device in the ungrounded and/or non-short-circuited position in dependence on the measured residual voltage, wherein the actuation lock can only be released or is automatically released when the residual voltage measured by the residual voltage gauge (10) is smaller than a predefined voltage limit.

2. A work machine in accordance with the preceding claim, wherein the cover latching (25) is compulsorily coupled to the grounding device (23) such that the cover (21) can only be opened when the grounding device (23) is in a grounded and/or short-circuited position.

3. A work machine in accordance with one of the preceding claims, wherein the grounding device (23) has a latching device for latching the grounding device (23) in the grounded and/or short-circuited position.

4. A work machine in accordance with one of the preceding claims, wherein an actuation lever (24) of the grounding device (23) is mechanically compulsorily coupled to a latching part (26) of the cover latching (25).

5. A work machine in accordance with one of the preceding claims, wherein the grounding device (23) is integrated into the transformer (14, 16), is in particular arranged in the interior of a transformer housing, such that only one actuation element of the grounding device (23) is accessible from the outer side of the transformer.

6. A work machine in accordance with one of the two preceding claims, wherein the residual voltage gauge (10) is connectable to a residual voltage display (11) for displaying the measured residual voltage.

7. A work machine in accordance with one of the preceding claims, wherein the transformer (14, 16), has an integrated discharge device (9) for discharging the transformer (14, 16) and/or an intermediate voltage circuit (15), wherein the discharge device (9) is actuable by interrupting or removing a control line for controlling the transformer.

8. A work machine in accordance with one of the preceding claims, wherein the at least one transformer (14) is a motor transformer (14) associated with an electric motor (4) of the electric drive (3).

9. A work machine in accordance with one of the preceding claims, wherein the at least one transformer is a generator transformer (16) associated with a generator (5) of the electric drive (3).

10. A work machine in accordance with one of the preceding claims, wherein at least two transformers (14, 16) are provided which are connected to one another by a common intermediate circuit (15), wherein each of the two transformers (14, 16) has a grounding device (23) and an integrated discharging device (9) such that the intermediate circuit is also grounded overall by the other grounded and/or short-circuited transformer after a removal of a transformer.

11. A work machine in accordance with one of the preceding claims, wherein a start latching device is automatically actuated by removal of at least one transformer (14, 16) from its installation position such that the internal combustion engine (6) cannot be started, wherein the removal of the transformer (14, 16) from its installation position is only possible when the start latching device is manually actuated such that the internal combustion engine (6) cannot be started.

12. A work machine in accordance with one of the preceding claims, wherein an internal combustion engine (6) is provided for driving a generator (5) for supplying the electric drive (3) with electrical energy.

13. A transformer for a work machine in accordance with one of the preceding claims, having power connections (18) covered by a cover (21) for connecting power cables (22), wherein a manually actuable grounding device (23) is provided for the grounding, in particular all-pole grounding, of the transformer (14, 16) and/or for the short-circuiting of at least one intermediate circuit (15), wherein the grounding device (23) is coupled to a cover latching (25) for latching the cover (21) such that the cover (21) can be unlatched by actuating the grounding device (23), **characterized in that** the transformer (14, 16) comprises a residual voltage gauge (10) for measuring a residual voltage that is applied to the transformer (14, 16) or to the transformer intermediate circuit (15), wherein the grounding device (23) comprises an actuation lock for locking the grounding device in the ungrounded and/or non-short-circuited position in dependence on the measured residual voltage, wherein the actuation lock can only be released or is automatically released when the residual voltage measured by the residual voltage gauge (10) is smaller than a predefined voltage limit.

## Revendications

1. Machine de travail, en particulier machine de chantier et/ou abatteuse par exemple véhicule à chenilles, camion-benne, camion ou similaires, avec un entraînement électrique (3) comprenant une électronique de puissance (13), laquelle comprend au moins un convertisseur (14, 16) et/ou un circuit intermédiaire (15) et ainsi possède des raccords de puissance (18) recouverts d'un couvercle (21) pour le raccordement de câbles de puissance (22), un dispositif de mise à la terre actionnable manuellement (23) étant prévu en particulier pour la mise à la terre sur tous les pôles du convertisseur (14, 16) et/ou pour le court-circuitage de l'au moins un circuit intermédiaires (15), le dispositif de mise à la terre (23) étant couplé avec un dispositif de verrouillage du couvercle (25) pour verrouiller le couvercle (21) de telle manière que le couvercle (21) peut être déverrouillé par l'actionnement du dispositif de mise à la terre (23), **caractérisé en ce que** le convertisseur (14, 16) comprend un voltmètre (10) de tension résiduelle pour mesurer la tension résiduelle appliquée au convertisseur (14, 16) ou au circuit intermédiaire du convertisseur, le dispositif de mise à la terre (23) comprenant un mécanisme de blocage pour bloquer le dispositif de mise à la terre dans la position sans mise à la terre et/ou sans court-circuitage en fonction de la tension résiduelle mesurée, le mécanisme de blocage ne pouvant être débloqué ou ne se débloque automatiquement que lorsque la tension résiduelle mesurée par le voltmètre (10) de tension résiduelle est inférieure à un seuil de tension prédéterminé.

2. Machine de travail selon la revendication précédente, **caractérisée en ce que** le dispositif de verrouillage du couvercle (25) est couplé de force au dispositif de mise à la terre (23) de telle manière que le couvercle (21) ne peut être ouvert que lorsque le dispositif de mise à la terre (23) se trouve dans une position avec mise à la terre et/ou court-circuitage.

3. Machine de travail selon l'une quelconque des revendications précédentes, le dispositif de mise à la terre (23) comportant un dispositif de verrouillage pour verrouiller le dispositif de mise à la terre (23) dans la position avec mise à la terre et/ou court-circuitage.

4. Machine de travail selon l'une quelconque des revendications précédentes, un levier d'actionnement (24) du dispositif de mise à la terre (23) étant couplé de force et de manière mécanique avec un élément de verrouillage (26) du dispositif de verrouillage du couvercle (25).

5. Machine de travail selon l'une quelconque des revendications précédentes, **caractérisée en ce que** le dispositif de mise à la terre (23) est intégré dans le convertisseur (14, 16), notamment agencé à l'intérieur d'un boîtier de convertisseur de telle manière que seul un élément d'actionnement du dispositif de mise à la terre (23) est accessible depuis le côté extérieur du convertisseur.

6. Machine de travail selon l'une quelconque des revendications précédentes, le voltmètre (10) pouvant être relié à un affichage de tension résiduelle (11) pour afficher la tension résiduelle mesurée.

7. Machine de travail selon l'une quelconque des revendications précédentes, **caractérisée en ce que** le convertisseur (14, 16) comprend un dispositif de décharge (9) intégré pour le déchargement du convertisseur (14, 16) et/ou d'un circuit de tension intermédiaire (15), le dispositif de décharge (9) pouvant être actionné par une interruption ou un débranchement d'une ligne de commande pour commander le convertisseur.

8. Machine de travail selon l'une quelconque des revendications précédentes, **caractérisée en ce que** l'au moins un convertisseur (14) est un convertisseur de moteur (14) assigné à un moteur électrique (4) de l'entraînement électrique (3).

9. Machine de travail selon l'une quelconque des revendications précédentes, l'au moins un convertisseur étant un convertisseur de génératrice (16) assigné à une génératrice (5) de l'entraînement électrique (3).

10. Machine de travail selon l'une quelconque des revendications précédentes, au moins deux convertisseurs (14, 16) étant prévus, lesquels sont reliés entre eux par un circuit intermédiaire commun (15), chacun des deux convertisseurs (14, 16) possédant un dispositif de mise à la terre (23) et un dispositif de décharge (9) intégré de sorte que le circuit intermédiaire est dans son ensemble mis à la terre, même après le démontage d'un convertisseur, au moyen de l'autre convertisseur mis à la terre et/ou court-circuité.

11. Machine de travail selon l'une quelconque des revendications précédentes, **caractérisée en ce que** l'enlèvement d'au moins un convertisseur (14,16) de sa position de montage, fait actionner automatiquement un dispositif à initier le blocage de telle manière que le moteur à combustion (6) ne peut pas être mis en marche, l'enlèvement du convertisseur (14,16) de sa position de montage n'étant possible que lorsque le dispositif à initier le blocage est actionné manuellement de telle manière que le moteur à combustion (6) ne peut pas être mis en marche.

12. Machine de travail selon l'une quelconque des revendications précédentes, **caractérisée en ce qu'**un moteur à combustion (6) est prévu pour entraîner une génératrice (5) pour alimenter l'entraînement électrique (3) en énergie électrique.

13. Convertisseur pour une machine de travail selon l'une quelconque des revendications précédentes, avec des raccords de puissance (18) recouverts d'un couvercle (21) pour le raccordement de câbles de puissance (22), un dispositif de mise à la terre manuellement actionnable (23) étant prévu en particulier pour la mise à la terre sur tous les pôles du convertisseur (14,16) et/ou pour le court-circuitage de l'au moins un circuit intermédiaires (15), le dispositif de mise à la terre (23) étant couplé avec un dispositif de verrouillage du couvercle (25) pour verrouiller le couvercle (21) de telle manière que le couvercle (21) peut être déverrouillé par l'actionnement du dispositif de mise à la terre (23), **caractérisé en ce que** le convertisseur (14, 16) comprend un voltmètre (10) de tension résiduelle pour mesurer la tension résiduelle appliquée au convertisseur (14, 16) ou le circuit intermédiaire du convertisseur (15), le dispositif de mise à la terre (23) comprenant un mécanisme de blocage pour bloquer le dispositif de mise à la terre dans la position sans mise à la terre et/ou sans court-circuitage en fonction de la tension résiduelle mesurée, le mécanisme de blocage ne pouvant être débloqué ou ne se débloque automatiquement que lorsque la tension résiduelle mesurée par le voltmètre (10) de tension résiduelle est inférieure à un seul de tension prédéterminé.
